# EUROPÄISCHE PATENTSCHRIFT

(11) **EP 4 438 242 B1**
(45) Veröffentlichungstag und Bekanntmachung des Hinweises auf die Patenterteilung: **14.05.2025**
(21) Anmeldenummer: 24153489.0
(22) Anmeldetag: 23.01.2024
(51) Int. Cl.: B25J 9/16

(54) **SYSTEM UND VERFAHREN ZUR ÜBERWACHUNG EINES GEFAHRENBEREICHS EINES ROBOTERS**
SYSTEM AND METHOD FOR MONITORING A HAZARDOUS AREA OF A ROBOT
SYSTÈME ET PROCÉDÉ DE SURVEILLANCE D'UNE ZONE DANGEREUSE D'UN ROBOT

(30) Priorität: 29.03.2023 DE 102023107973
(43) Veröffentlichungstag der Anmeldung: 02.10.2024
(73) Patentinhaber: SICK AG, 79183 Waldkirch (DE)
(72) Erfinder: Hofmann, Dr. Christoph, 79108 Freiburg (DE); Pokrandt, Dr. Peter, 76474 Au am Rhein (DE)

(56) Entgegenhaltungen:
- EP-B1- 3 099 452
- DE-A1- 102004 043 514
- DE-A1- 102013 110 901
- DE-A1- 102016 007 519
- ROSENSTRAUCH MARTIN J ET AL: "Safe human-robot-collaboration-introduction and experiment using ISO/TS 15066", 2017 3RD INTERNATIONAL CONFERENCE ON CONTROL, AUTOMATION AND ROBOTICS (ICCAR), IEEE, 24 April 2017 (2017-04-24), pages 740 - 744, XP033104621, DOI: 10.1109/ICCAR.2017.7942795
- STEINECKER THOMAS ET AL: "Mean Reflected Mass: A Physically Interpretable Metric for Safety Assessment and Posture Optimization in Human-Robot Interaction", 2022 INTERNATIONAL CONFERENCE ON ROBOTICS AND AUTOMATION (ICRA), IEEE, 23 May 2022 (2022-05-23), pages 11209 - 11215, XP034146357, DOI: 10.1109/ICRA46639.2022.9811582

## Beschreibung

Die vorliegende Erfindung betrifft ein System zur Überwachung eines Gefahrenbereichs eines Roboters gemäß dem Oberbegriff von Anspruch 1 und ein Verfahren zur Überwachung eines Gefahrenbereichs eines Roboters gemäß dem Oberbegriff von Anspruch 9.

Die Erfindung betrifft das Feld der Roboterbewegungsplanung unter Laufzeit-Bedingungen oder unter Echtzeit-Bedingungen. Mittels Bahnplanungsalgorithmen und Algorithmen zur Kinematik sollen Robotertrajektorien hinsichtlich Zeit, Energieverbrauch, Verschleiß, Beschleunigung, Geschwindigkeit oder Impulsübertrag auf menschliche Körperteile optimiert werden.

Insbesondere soll hier zwischen zwei Szenarien unterschieden werden. Ist ein Mensch nicht in einer Roboterapplikation zugegen, soll die Bahnplanung ohne Kriterien der Sicherheitstechnik also ohne Schutz des Menschen erfolgen. Dann können rein wirtschaftliche Optimierungskriterien zum Tragen kommen. Dies ändert sich jedoch grundlegend, wenn ein Mensch zugegen ist. Dieser Mensch soll durch industrielle Peripheriesensorik sicher erkannt werden können.

Die technische Spezifikation ISO/TS 15066:2016 gibt eine Anleitung für den kollaborierenden Roboterbetrieb, bei dem sich ein Robotersystem und Menschen denselben Arbeitsraum teilen. Bei einem derartigen Betrieb ist die Integrität von sicherheitsbezogenen Steuerungssystemen von besonderer Bedeutung, insbesondere, wenn Prozessparameter, wie z.B. Geschwindigkeit und Kraft, gesteuert werden.

Eine Basis bilden die Normen ISO 10218-1 und ISO 10218-2 zur Sicherheit von Industrierobotern und geben eine Anleitung zu Betriebsweisen bei kollaborierenden Robotern.

Die DE 10 2004 043514 A1 offenbart eine Vorrichtung zum Steuern wenigstens einer sicherheitsrelevanten Funktion einer Maschine mit einer Maschinensteuerung zum Steuern der Bewegungen der Maschine, mit zumindest einem Sensor zum Erfassen eines Objekts innerhalb eines Überwachungsbereichs und mit einer Auswerteeinheit zum Festlegen eines Gefahrenbereichs und zum Auslösen der sicherheitsrelevanten Funktion beim Eindringen des erfassten Objekts in den Gefahrenbereich. Zur Festlegung des Gefahrenbereichs ist die Auswerteeinheit mit der Maschinensteuerung gekoppelt, und die Auswerteeinheit ist zum Ableiten der für die Festlegung des Gefahrenbereichs erforderlichen Parameter, ausgehend von der Maschinensteuerung zur Bewegungssteuerung der Maschine verwendeten Steuersignalen ausgebildet. Weiterhin wird ein entsprechendes Verfahren beschrieben.

Die DE 10 2016 007519 A1 offenbart ein Verfahren zum Überwachen einer Anlage mit wenigstens einem Roboter, insbesondere mehreren Robotern. Das Verfahren umfasst die Schritte: Überwachen eines Abstandsbereichs wenigstens eines Roboters der Anlage und Überführen dieses Roboters in einen sicheren Zustand auf Basis einer Erfassung einer Position wenigstens einer Person innerhalb dieses Abstandsbereichs.

Die EP 3 099 452 B1 offenbart eine Sicherheitseinrichtung für Werker im Arbeitsbereich von bewegten automatischen Maschinen, insbesondere Industrierobotern, wobei die Sicherheitseinrichtung eine mobile und vom Werker zu tragende Erfassungseinrichtung zur Lokalisierung des Werkers sowie eine Auswerte- und Steuereinrichtung aufweist, wobei die Einrichtungen in einer bevorzugt drahtlosen Kommunikationsverbindung stehen und die Auswerte- und Steuereinrichtung auch eine Schnittstelle für die Eingabe von Daten über den aktuellen Gefahrenbereich der automatischen Maschine, insbesondere des Industrieroboters, aufweist.

Die DE 10 2013 110 901 A1 offenbart eine Technologie zur Planung und Implementierung von Mensch-Roboter-Kollaborationsabläufen. In einem Planungsverfahren wird ein Layout eines Arbeitsbereichs erfasst, in dem ein Mensch und ein Manipulator innerhalb eines Kollaborationsbereichs zusammenwirken. Es werden Mensch-Roboter-Kollaborationszonen gekennzeichnet und ggfs. kollisionsgefährdete Körperzonen oder Körperteile angegeben. Für den Manipulator und/oder eine Manipulatorbestückung werden Grenzgeometrien erfasst und es wird für mindestens einen Bezugspunkt ein Bewegungsplan erfasst. Mittels eines automatisierten Bewertungsmoduls wird eine zulässige Prozessgeschwindigkeit zur Nachverfolgung des Bewegungsplans ermittelt, bei deren Einhaltung im Falle einer Kollision zwischen Manipulator und Mensch nur mit einer zulässigen Beeinträchtigung des Menschen zu rechnen ist. Auf Basis der ermittelten zulässigen Geschwindigkeiten wird ein Geschwindigkeitsprofil erstellt.

Eine Aufgabe der Erfindung besteht darin, ein verbessertes System zur Überwachung eines Gefahrenbereichs eines Roboters, mit mindestens einem Sensor mit mindestens einem räumlichen Überwachungsbereich bereitzustellen. Eine weitere Aufgabe der Erfindung ist es einen Lösungsraum für ein produktives und kollaboratives Roboterverhalten zu erweitern.

Die Aufgabe wird gemäß Anspruch 1 gelöst durch ein System zur Überwachung eines Gefahrenbereichs eines Roboters, mit mindestens einem Sensor mit mindestens einem räumlichen Überwachungsbereich zur Überwachung des Gefahrenbereichs, und einer Steuer- und Auswerteeinheit, und einer Robotersteuerung zum Steuern der Bewegungen mindestens eines gefahrbringenden Teils des Roboters, wobei die Robotersteuerung und die Steuer- und Auswerteeinheit elektronisch mittels mindestens einer Schnittstelle miteinander verbunden sind, wobei der Sensor ausgebildet ist, zyklisch mindestens 3D-Daten des Überwachungsbereichs an die Steuer- und Auswerteeinheit zu senden, wobei der Sensor und die Steuer- und Auswerteeinheit weiter ausgebildet sind, mindestens einen räumlichen Schutzbereich im Überwachungsbereich zu erzeugen, wobei die Steuer- und Auswerteeinheit ausgebildet ist, Personen im Überwachungsbereich des Sensors anhand der 3D-Daten zu lokalisieren und deren Abstand zu dem gefahrbringenden Teil des Roboters zu bestimmen, wobei die Steuer- und Auswerteeinheit ausgebildet ist, den räumlichen Schutzbereich so anzuordnen, dass der räumliche Schutzbereich den gefahrbringenden Teil des Roboters vollständig umgibt und einschließt und eine Oberfläche des Schutzbereichs eine äußere Sicherheitsgrenze bildet, wobei die Steuer- und Auswerteeinheit ausgebildet ist die Lage der Sicherheitsgrenze in Abhängigkeit von einem Abstand, einer Bewegungsrichtung und/oder einer Bewegungsgeschwindigkeit der Person zu dem gefahrbringenden Teil des Roboters festzulegen, wobei die Robotersteuerung ausgebildet ist den gefahrbringenden Teil des Robotes innerhalb des Schutzbereichs frei zu bewegen, wobei die Robotersteuerung und/oder die Steuer- und Auswerteeinheit ausgebildet ist das Volumen der Person oder das Volumen einzelner Extremitäten zu berücksichtigen und basierend auf dem Volumen der Person oder dem Volumen einzelner Extremitäten zusätzliche 3D-Pufferzonen zu addieren, wobei das Volumen der Person oder das Volumen einzelner Extremitäten mit den zusätzlichen 3D-Pufferzonen bei der Kinematik des gefahrbringenden Teils des Roboters berücksichtigt werden, wobei diese 3D-Pufferzonen den Schutzbereich zusätzlich umschließen.

Die Aufgabe wird weiter gemäß Anspruch 9 gelöst durch ein Verfahren zur Überwachung eines Gefahrenbereichs eines Roboters, mit mindestens einem Sensor mit mindestens einem räumlichen Überwachungsbereich zur Überwachung des Gefahrenbereichs, und einer Steuer- und Auswerteeinheit, und einer Robotersteuerung zum Steuern der Bewegungen mindestens eines gefahrbringenden Teils des Roboters, wobei die Robotersteuerung und die Steuer- und Auswerteeinheit elektronisch mittels mindestens einer Schnittstelle miteinander verbunden sind, wobei der Sensor zyklisch mindestens 3D-Daten des Überwachungsbereichs an die Steuer- und Auswerteeinheit sendet, wobei der Sensor und die Steuer- und Auswerteeinheit mindestens einen räumlichen Schutzbereich im Überwachungsbereich erzeugen, wobei die Steuer- und Auswerteeinheit Personen im Überwachungsbereich des Sensors anhand der 3D-Daten lokalisiert und deren Abstand zu dem gefahrbringenden Teil des Robotersbestimmt, wobei die Steuer- und Auswerteeinheit den räumlichen Schutzbereich so anordnet, dass der räumliche Schutzbereich den gefahrbringenden Teil des Roboters vollständig umgibt und einschließt und eine Oberfläche des Schutzbereichs eine äußere Sicherheitsgrenze bildet, wobei die Steuer- und Auswerteeinheit die Lage der Sicherheitsgrenze in Abhängigkeit von einem Abstand, einer Bewegungsrichtung und/oder einer Bewegungsgeschwindigkeit der Person zu dem gefahrbringenden Teil des Roboters festgelegt wird, wobei die Robotersteuerung den gefahrbringenden Teil des Roboters innerhalb des Schutzbereichs frei bewegt, wobei die Robotersteuerung und/oder die Steuer- und Auswerteeinheit ausgebildet ist das Volumen der Person oder das Volumen einzelner Extremitäten zu berücksichtigen und basierend auf dem Volumen der Person oder dem Volumen einzelner Extremitäten zusätzliche 3D-Pufferzonen zu addieren, wobei das Volumen der Person oder das Volumen einzelner Extremitäten mit den zusätzlichen 3D-Pufferzonen bei der Kinematik des gefahrbringenden Teils des Roboters berücksichtigt werden, und wobei diese 3D-Pufferzonen den Schutzbereich zusätzlich umschließen.

Die Steuer- und Auswerteeinheit ist ausgebildet, Objekte oder Personen im Sichtbereich des Sensors anhand der 3D-Daten des Sensors zu lokalisieren und deren Abstand zum gefahrbringenden beweglichen Teil des Roboters zu bestimmen.

Ein oder beispielsweise mehrere Sensoren, insbesondere 3D-Sensoren sind vorzugsweise sicherheitszertifiziert. Diese erfassen in Echtzeit und mit Synchronisierungsinformationen 3D-Daten des Überwachungsbereichs und liefern die Daten an die Steuer- und Auswerteeinheit.

Eine kausale und dynamische Anpassung von Randbedingungen für die Bewegungsplanung des Roboters kann wie folgt gelöst werden: Die Peripherie einer Applikation wird durch den mindestens einen Sensor, beispielsweise mittels industrieller Sicherheitssensoren ausgestattet. Dieser Sensor erfasst die Präsenz einer Person bzw. eines Menschen. Wird eine Person detektiert, so werden beispielsweise in einem Bahnplanungs-Programm Randbedingungen für die Bahnplanung verändert, falls dies notwendig ist.

Gemäß der Erfindung werden die Arbeitsabläufe des Roboters auch bei der Präsenz einer Person möglichst lange aufrechterhalten und es wird eine sichere Kollaboration ermöglicht. Die Arbeitsabläufe werden kausal und dynamisch angepasst, je nachdem, ob und wo eine Person in der Nähe des Roboters ist und mittels des Sensors bzw. der Peripheriesensorik erfasst wurde. Dazu gibt es unterschiedliche Strategien. Grundlegend unterscheiden sie sich in der Orts- und in der Zeitdomäne.

In der Ortsdomäne gilt es zuerst Quetschszenarien und Scherszenarien zwischen der Person und dem beweglichen gefahrbringenden Teil des Roboters zu eliminieren, denn von ihnen geht die größte Verletzungsschwere aus. Schließlich geht es darum ein Rammen des Roboters bzw. der gefahrbringenden Teile des Roboters zu vermeiden.

In der Zeitdomäne können alle beweglichen Teile bzw. gefahrbringende Teile des Roboters verlangsamt oder gestoppt werden, um der Person oder dem Werker mehr Zeit zu geben sich aus einer potentiell gefährlichen Situation zu entfernen bzw. zu befreien.

Falls die Gefahr nicht mehr gegeben ist, ist es beispielweise vorgesehen, dass ein Wiederanlauf der Bewegung des Roboters erfolgt.

Ein Vermeiden von Quetschungen durch beweglich Teile des Roboters kann beispielsweise folgendermaßen erfolgen. Es ist beispielsweise vorgesehen, den Schutzbereich bzw. das Volumen, in dem mögliche Trajektorien errechnet werden dürfen geschickt einzuschränken. Ist z. B. eine Person zugegen kann auf den bestehenden Schutzbereich eine zusätzliche 3D-Pufferzone addiert werden. Diese 3D-Pufferzone umschließt den Schutzbereich zusätzlich. Diese 3D-Pufferzone trägt dazu bei das Kontakte bzw. Berührungen zwischen dem gefahrbringenden Teil des Roboters und der Person gar nicht erfolgen werden, da bei allen möglichen Trajektorien innerhalb des Schutzbereichs immer noch genug Platz bleibt, um eine Quetschung zu vermeiden.

Die 3D-Pufferzonen die bei einer Präsenz einer Person hinzu addiert werden, können beispielsweise an anthropometrische Daten gekoppelt werden - z. B. die Dicke einer Hand, die Dicke eines Armes, die dicke eines Beines usw. Dabei können auch extra Pufferzonen berücksichtigt werden, die aus der typischen Bewegungsgeschwindigkeit der menschlichen Gliedmaßen resultieren können. Für solche anthropometrische Daten gibt es eine Vielzahl von Normen, die auch Unterscheidung zwischen dem Alter und der ethnischen Abstammung von Personen machen.

Ein Vermeiden von Scherungen durch die beweglichen Teile des Roboters kann beispielsweise folgendermaßen erfolgen. Das mögliche Scheren von menschlichen Gliedmaßen in Robotergelenken kann verhindert werden. So können manche Gelenkwinkel des Roboters mit Beschränkungen versehen werden, die ein Scheren vermeiden. Insbesondere sollen keine spitzen Winkel zugelassen werden. Es ist dabei vorgesehen, dass jede Roboterachse unterschiedliche Beschränkungen erhalten kann.

Beispielsweise ist ein Verlangsamen oder Stoppen der gefahrbringenden beweglichen Teile des Roboters vorgesehen. Schließlich kann die Relativgeschwindigkeit zwischen Person und Roboter noch kausal geregelt werden. Beispielsweise werden Maßnahmen der Normen wie der ISO 10218-2 oder der ISO/TS 15066:2016 über das Verfahren der sog. Abstands- und Geschwindigkeitsüberwachung (Speed and Separation Monitoring) berücksichtigt. Anders als in den oben genannten Verfahren wird hier nicht in der Ortsdomäne (also beispielsweise die Bahn) eingeschränkt, sondern in der Zeitdomäne eingeschränkt, da nämlich bahntreu verlangsamt oder gestoppt wird und situativ die Fahrt aufgenommen wird, sofern das Gefährdungspotential nicht mehr gegeben ist.

Beispielsweise wird eine Hierarchisierung der Gefahrenminderungsmaßnahmen vorgesehen. Es ist beispielsweise vorgesehen, dass ein Kontrollsystem bzw. eine ,ruleengine' verwendet wird, welches Regeln verarbeitet, unter welchen kausalen Voraussetzungen, welche der oben beschriebenen Gefahrenminderungsmaßnahmen eingesetzt werden können. Ist z. B. eine Person noch weit vom Roboter entfernt, so können zunächst weniger weitreichende Methoden wie das Konzept der mittleren reflektierten Masse (MRM-Konzept) angewendet werden. Kommt die Person näher können z. B. zusätzlich gefährliche Scherwinkel vermieden werden und die Geschwindigkeit der gefahrbringenden Teile vermindert werden. Der Schutzbereich bzw. Volumen für mögliche situative Bahnplanungen ist hierzu noch kaum eingeschränkt. Erst wenn die Person in unmittelbarer Nähe zum Roboter ist, wird schließlich das Quetschen vermieden und der Roboter in seiner Bewegungsfreiheit eingeschränkt. Auch kann eine Bewertung stattfinden ob z. B. genug Zeit bleibt, dass bestimmte Mechanismen wie "stumpfe Gelenkwinkel" in der antizipierten Annäherungszeit des Menschen möglich sind. Sollte dies beispielsweise ausgeschlossen sein so muss der Roboter gestoppt werden.

Durch die oben beschriebenen Maßnahmen kann die Bewegung des Roboters deutlich länger aufrechterhalten werden als dies bei einem Stoppen des Roboters oder bei einem bahntreuen Verlangsamen des Roboters möglich wäre. So kann die Produktion auch in Präsenz einer Person solange aufrechterhalten werden bis ein Lösungsraum bzw. ein Schutzbereich für neue Roboterbahnen eine Bewegung zulässt. Es sind damit also Ausweichmanöver des Roboters in Gegenwart der Person möglich. Auf diese Weise kann auch eine ergonomische Zusammenarbeit zwischen Personen und Roboter gewährleistet werden. Es wird auch eine Häufigkeit bzw. eine Frequenz eines gefahrbringenden Zustandes reduziert. Das wiederum hat einen vorteilhaften Einfluss auf die Höhe des Performance Levels der gesamten Sicherheitsapplikation. Ist die Person nicht zugegen kann das volle Volumen bzw. der gesamte Überwachungsbereich zur Bahnplanung ausgeschöpft werden, gleiches gilt für andere Restriktionen. So kann rein nach wirtschaftlichen Kriterien optimiert werden. Durch die oben beschriebenen Maßnahmen kann eine neue Art der sicherheitsgerichteten Interaktion zwischen Person und Roboter ermöglicht werden.

Gemäß der Erfindung ist die Robotersteuerung ausgebildet die Kinematik des gefahrbringenden Teils des Roboters im Schutzbereich örtlich und/oder zeitlich anzupassen.

In Weiterbildung der Erfindung ist die Steuer- und Auswerteeinheit ausgebildet, mindestens den gefahrbringenden Teil des Roboters zu veranlassen eine Ausweichbewegung durchzuführen, falls der Abstand der Person zu dem gefahrbringenden Teil des Roboters vordefinierte Abstandswerte unterschreitet.

Gemäß der Weiterbildung der Erfindung ist die Steuer- und Auswerteeinheit ausgebildet, den gefahrbringenden Teil der Maschine umzulenken, um die Produktivität des Arbeitsablaufs bzw. des Roboters aufrecht zu erhalten.

Beispielsweise ist die Steuer- und Auswerteeinheit ausgebildet mindestens den gefahrbringenden Teil des Roboters zu veranlassen ein Rammen mit der Person zu vermeiden.

Ein Vermeiden von Rammen der beweglichen Teile des Roboters kann beispielsweise folgendermaßen erfolgen. In der Publikation STEINECKER et al. Mean Reflected Mass: A Physically Interpretable Metric for Safety Assessment and Posture Optimization in Human-Robot Interaction. In: 2022 International Conference on Robotics and Automation (ICRA). IEEE, 2022. S. 11209-11215, wird die reflektierte Masse des Roboters eingeführt und beschrieben. Die reflektierte Masse ist neben der Kontaktgeometrie und der Relativgeschwindigkeit zwischen Person und Roboter einer der Parameter, die den größten Einfluss auf die Schwere der menschlichen Verletzungen bei einer Kollision haben. Die reflektierte Masse hängt von der Roboterkonfiguration ab und kann insbesondere bei kinematisch redundanten Robotern optimiert werden. Die Metrik der mittleren reflektierten Masse (MRM) ist unabhängig von der Kontakt-/Bewegungsrichtung und ermöglicht die Bewertung und Optimierung der Roboterhaltung in Bezug auf die Sicherheit. Im Gegensatz zu bestehenden Metriken ist diese physikalisch interpretierbar, was bedeutet, dass diese mit biomechanischen Verletzungsdaten für eine realistische und modellunabhängige Sicherheitsanalyse in Beziehung gesetzt werden kann.

Es ist nun vorgesehen solche Algorithmen zur Berechnung der mittleren reflektierten Masse vorzusehen und diese kausal und kontextspezifisch einzusetzen, wenn eine Person von dem Sensor erfasst wird. In Abwesenheit der Person, werden diese Algorithmen nicht scharf geschaltet, da dieser in der Regel die Produktivität oder die Taktzeit in der Applikation senkt. Interessant an diesem Ansatz ist, dass durch das Konzept der mittleren reflektierten Masse eine deutlich bessere Entscheidung als der schlechteste Fall getroffen werden kann.

In Weiterbildung der Erfindung ist die Steuer und Auswerteeinheit ausgebildet einzelne Körperteile bzw. Extremitäten der Person zu identifizieren und deren Abstand, Bewegungsrichtung und/oder einer Bewegungsgeschwindigkeit zu dem gefahrbringenden Teil des Roboters zu bestimmen.

Beispielsweise erfolgt eine Identifikation der gefährdeten Körperteile bzw. Extremitäten. Aus dem Applikationskontext heraus kann beispielsweise geschlossen werden, welche Körperteile bei der Präsenz eines Menschen getroffen werden könnten. Entsprechend werden beispielsweise kausale Vorgaben oder kausale Wenn-Dann-Vorgaben für den Bewegungsplanungsalgorithmus gemacht werden. Wird insbesondere ein kalibrierter Sensor mir einem messenden räumlichen Überwachungsbereich verwendet, so kann auch eine Vermessung und Abschätzung der menschlichen Gliedmaßen bzw. Körperteile vorgenommen werden. Diese Vermessung kann auch zur Plausibilisierung verwendet werden, dass die Inputparameter für die Bahnplanungsberechnung korrekt bzw. angemessen sind.

In Weiterbildung der Erfindung ist die Robotersteuerung und/oder die Steuer- und Auswerteeinheit ausgebildet biomechanische Eigenschaften der Person oder einzelner Extremitäten bei der Kinematik des gefahrbringenden Teils des Roboters zu berücksichtigen.

Insbesondere werden dauerhafte bzw. statische Kontakte und zeitlich begrenzte Kontakte unterschieden.

Bei den dauerhaften Kontakten existiert im Falle einer Kollision zwischen Person und Roboter eine Quetschgefahr, da ein menschliches Körperteil zwischen Roboter und Applikationsoberfläche eingeklemmt werden kann.

Bei den zeitlich begrenzten bzw. transienten Kontakten ist die Gefahr nicht so hoch, da die Person hier noch ausweichen kann, da die Person beispielsweise lediglich zur Seite gedrückt wird. Entsprechend sind Limitierungen hier weniger restriktiv.

Biomechanische Grenzwerte gemäß der Norm DIN ISO/TS 15066 werden festgelegt, um biomechanische Belastungen zu verhindern, die durch die Roboterbewegung verursacht werden und Potential für eine geringfügige Verletzung einer Bedienperson im Fall eines Kontakts zwischen Bedienperson und Roboter bietet.

Druckwerte aus in Studien ermittelten konservativen Schätzwerten zu Schmerzempfindungen können genutzt werden, um transiente Druck- und Kraftgrenzen zu bestimmen. Anschließend kann die sich aus dem hypothetischen Kontakt zwischen Roboter und Mensch ergebende übertragene Energie modelliert werden, wobei ein vollständig unelastischer Kontakt zwischen dem Roboter und der Bedienperson angenommen wird und die Nutzlastkapazität des Roboters und mit dem in Kontakt kommenden Körperteil der Bedienperson verbundene Faktoren berücksichtigt werden. Nachdem die übertragene Energie ermittelt wurde, können Empfehlungen für die Geschwindigkeitsgrenze in Bezug auf die Roboterbewegung im Kollaborationsraum ausgearbeitet werden. Dies erfolgt, um die übertragene Energie auf einem Niveau zu halten, das im Falle eines Kontakts zwischen dem Roboter und der Bedienperson im Kollaborationsraum unterhalb der Schwelle von geringfügigen Verletzungen beim Menschen liegt.

Biomechanische Grenzwerte gemäß der Norm DIN ISO/TS 15066, Tabelle A.2 sind wie folgt definiert:

| **Körperregion** | **Spezifischer Körperbereich** | | **Quasistatischer Kontakt** | | **Transienter Kontakt** | |
|---|---|---|---|---|---|---|
| | | | **Maximal zulässiger Druck^{a} pₛ N/cm²** | **Maximal zulässige Kraft^{b} N** | **Faktor für den maximal zulässigen Druck^{c} *P*_{T}** | **Faktor für die maximal zulässige Kraft^{c} *F*_{T}** |
| *Schädel und Stirn*^{d} | *1* | *Stirnmitte* | *130* | *130* | *Nicht anwendbar* | *Nicht anwendbar* |
| | *2* | *Schläfe* | *110* | | *Nicht anwendbar* | |
| *Gesicht*^{d} | *3* | *Kaumuskel* | *110* | *65* | *Nicht anwendbar* | *Nicht anwendbar* |
| Hals | 4 | Halsmuskel | 140 | 150 | 2 | 2 |
| | 5 | Siebter Halswirbel | 210 | | 2 | |
| Rücken und Schultern | 6 | Schultergelenk | 160 | 210 | 2 | 2 |
| | 7 | Fünfter Lendenwirbel | 210 | | 2 | 2 |
| Brustkorb | 8 | Brustbein | 120 | 140 | 2 | 2 |
| | 9 | Brustmuskel | 170 | | 2 | |
| Bauch | 10 | Bauchmuskel | 140 | 110 | 2 | 2 |
| Becken | 11 | Beckenknochen | 210 | 180 | 2 | 2 |
| Oberarme und Ellenbogengelenke | 12 | Deltamuskel | 190 | 150 | 2 | 2 |
| | 13 | Oberarmknochen | 220 | | 2 | |
| Unterarme und Handgelenke | 14 | Speiche | 190 | 160 | 2 | 2 |
| | 15 | Unterarmmuskel | 180 | | 2 | |
| | 16 | Armnerv | 180 | | 2 | |
| Hände und Finger | 17 | Zeigefingerkuppe D | 300 | 140 | 2 | 2 |
| | 18 | Zeigefingerkuppe ND | 270 | | 2 | |
| | 19 | Zeigefingerendgelenk D | 280 | | 2 | |
| | 20 | Zeigefingerendgelenk ND | 220 | | 2 | |
| | 21 | Daumenballen | 200 | 140 | 2 | 2 |
| | 22 | Handinnenfläche D | 260 | | 2 | |
| | 23 | Handinnenfläche ND | 260 | | 2 | |
| | 24 | Handrücken D | 200 | | 2 | |
| | 25 | Handrücken ND | 190 | | 2 | |
| Oberschenkel und Knie | 26 | Oberschenkelmuskel | 250 | 220 | 2 | 2 |
| | 27 | Kniescheibe | 220 | | 2 | |
| Unterschenkel | 28 | Schienbeinmitte | 220 | 130 | 2 | 2 |
| | 29 | Wadenmuskel | 210 | | 2 | |

In Weiterbildung der Erfindung ist die Robotersteuerung und/oder die Steuer- und Auswerteeinheit ausgebildet biomechanische Eigenschaften der Person oder einzelner Extremitäten zu berücksichtigen und basierend auf den biomechanischen Eigenschaften der Person oder einzelner Extremitäten zulässige Geschwindigkeiten des gefahrbringenden Teils des Roboters zu berechnen und bei der Kinematik des gefahrbringenden Teils des Roboters zu berücksichtigen.

Grenzwerte aus biomechanischen Eigenschaften können gemäß der Weiterbildung in zulässige maximale Robotergeschwindigkeiten umgerechnet werden, sofern das Körperteil, das Kontaktszenario und die sog. effektive Robotermasse bekannt sind.

Beispiele für auf der Grundlage des Körpermodells berechnete Geschwindigkeitsgrenzwerte bei transientem Kontakt gemäß der Norm DIN ISO/TS 15066, Tabelle A.5 sind wie folgt definiert:

| **Körperregion** | **Geschwindigkeitsgrenze in Abhängigkeit der effektiven Masse des Roboters, auf der Grundlage des maximalen Druckwertes bei einer Fläche von 1 cm² mm/s** | | | | | |
|---|---|---|---|---|---|---|
| | **1** | **2** | **5** | **10** | **15** | **20** |
| Hand/Finger | 2 400 | 2 200 | 2 000 | 2 000 | 2 000 | 1 900 |
| Unterarm | 2 200 | 1 800 | 1 500 | 1 400 | 1 400 | 1 300 |
| Oberarm | 2 400 | 1 900 | 1 500 | 1 400 | 1 300 | 1 300 |
| Bauch | 2 900 | 2 100 | 1 400 | 1 000 | 870 | 780 |
| Becken | 2 700 | 1 900 | 1 300 | 930 | 800 | 720 |
| Oberschenkel | 2 000 | 1 400 | 920 | 670 | 560 | 500 |
| Unterschenkel | 1 700 | 1 200 | 800 | 580 | 490 | 440 |
| Schultern | 1 700 | 1 200 | 790 | 590 | 500 | 450 |
| Brustkorb | 1 500 | 1 100 | 700 | 520 | 440 | 400 |

In Weiterbildung der Erfindung ist der Sensor ein Lichtlaufzeitsensor, ein Laserscanner mit mehreren Scanebenen, eine Lichtlaufzeitkamera, eine Stereokamera, ein FMCW-Lidarsensor, eine Ereignis-Kamera, ein Radarsensor, ein Ultrabreitband-Funksensor oder eine Infrarotkamera.

Derartige Sensoren sind geeignet einen räumlichen Überwachungsbereich wirksam zu überwachen.

Lichtlaufzeitmesssysteme ermöglichen die Entfernungsmessung durch Bestimmung der Zeitdifferenz zwischen Aussenden des Lichts und Zurückkommen des vom Messobjekt reflektierten Lichts.

Beispielsweise arbeitet der Lichtlaufzeitsensor nach einem direkten Lichtlaufzeitverfahren (dTOF), wonach kurze Lichtpulse oder Lichtpulsgruppen ausgesandt werden und die Zeit bis zum Empfang einer Remission oder Reflexion der Lichtpulse an einem Objekt gemessen wird. Die Lichtsignale sind dabei durch Lichtpulse gebildet.

Jedoch sind auch andere Lichtlaufzeitverfahren möglich, beispielsweise das Phasenverfahren, wonach Sendelicht amplitudenmoduliert ist und eine Phasenverschiebung zwischen Sende- und Empfangslicht bestimmt wird, wobei die Phasenverschiebung ebenfalls ein Maß für die Lichtlaufzeit ist (indirektes Lichtlaufzeitverfahren, iTOF).

Weiter kann ein CW-Verfahren (Continuous Wave) bzw. das synonyme Dauerstrich-Verfahren eingesetzt werden, wobei ein zeitlich konstantes Lichtsignal eingesetzt wird.

Bei diesem Verfahren werden beispielsweise über ein Gating-Signal die Einzelphotonen-events in zwei Zähler verteilt und aus dem Verhältnis der Zählerstände eine Phase berechnet.

Eine 3D-Kamera überwacht beispielsweise den Überwachungsbereich mittels einer Vielzahl von erfassten Distanzwerten. Eine 3D-Kamera hat den Vorteil, dass ein volumenartiger Schutzbereich einfach überwacht werden kann.

Eine Stereokamera überwacht beispielsweise den Überwachungsbereich mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger Schutzbereich überwacht werden kann.

Beispielsweise ist der Sensor als frequenz-modulierter-Dauerstrich (Frequency Modulated Continuous Wave, FMCW) - LiDAR-Sensor ausgebildet.

Im Gegensatz zu einem auf Lichtlaufzeitmessung von Laserpulsen basierenden LiDAR-Sensor sendet ein FMCW-LiDAR-Sensor keine gepulsten, sondern kontinuierliche Sendelichtstrahlen in den Überwachungsbereich aus, die während einer Messung, also einer zeitdiskreten Abtastung eines Messpunktes im Überwachungsbereich, eine vorgegebene Frequenzmodulation, das heißt eine zeitliche Änderung der Wellenlänge des Sendelichts, aufweisen. Die Messfrequenz liegt dabei typischerweise im Bereich von 10 bis 30 Hz. Die Frequenzmodulation kann beispielsweise als periodische Auf- und Abwärtsmodulation ausgebildet sein. Von Messpunkten im Überwachungsbereich reflektiertes Sendelicht weist im Vergleich zum ausgestrahlten Sendelicht einen Zeitversatz entsprechend der Lichtlaufzeit auf, die von der Entfernung des Messpunktes vom Sensor abhängt und aufgrund der Frequenzmodulation mit einer Frequenzverschiebung einhergeht. Im FMCW-LiDAR-Sensor werden ausgestrahltes und reflektiertes Sendelicht kohärent überlagert, wobei aus dem Überlagerungssignal die Entfernung des Messpunktes vom Sensor bestimmt werden kann. Das Messprinzip der kohärenten Überlagerung hat im Vergleich zu gepulsten oder amplituden-modulierten inkohärenten LiDAR Messprinzipien unter anderem den Vorteil einer erhöhten Immunität bezüglich Fremdlicht von beispielsweise anderen optischen Sensoren/Sensorsystemen oder der Sonne. Gegenüber Radarsensoren mit Wellenlängen im Bereich von Millimetern verbessert sich die Ortsauflösung, wodurch geometrische Eigenschaften einer Person messbar werden.

Bewegt sich ein Messpunkt mit einer Radialgeschwindigkeit auf den Sensor zu oder vom Sensor weg, weist das reflektierte Sendelicht zusätzlich eine Dopplerverschiebung auf. Diese Veränderung der Sendelichtfrequenz kann ein FMCW-LiDAR-Sensor bestimmen und daraus die Entfernung und die Radialgeschwindigkeit eines Messpunkts in einer einzigen Messung, also einer einmaligen Abtastung eines Messpunktes, bestimmen, während bei einem auf Lichtlaufzeitmessung von Laserpulsen basierenden LiDAR-Sensor für eine Bestimmung der Radialgeschwindigkeit wenigstens zwei Messungen, also zwei zeitlich beabstandete Abtastungen des gleichen Messpunktes, nötig sind.

Ereigniskameras geben einen asynchronen Strom von Ereignissen aus, die durch Änderungen in der Beleuchtungssituation ausgelöst werden. Die Pixel einer Ereigniskamera reagieren unabhängig voneinander auf auftretende Helligkeitsveränderungen. Jedes Pixel speichert einen Referenzwert für die Helligkeit und vergleicht diesen kontinuierlich mit dem aktuellen Helligkeitswert. Wenn der Helligkeitsunterschied einen Schwellenwert überschreitet, setzt das Pixel seinen Referenzwert zurück und erzeugt ein Ereignis: ein diskretes Paket, das die Pixeladresse und den Zeitstempel enthält. Ereignisse können auch die Polarität (Zunahme oder Abnahme) einer Helligkeitsänderung oder eine sofortige Messung der Beleuchtungsstärke enthalten.

Die Radarsensoren bilden beispielsweise räumliche Überwachungsbereiche zur Überwachung des Schutzbereiches. Die Schutzbereiche können nahezu beliebige Geometrien aufweisen. Beispielsweise sind die Schutzbereiche ausgehend vom Radarsensorgehäuse kegelförmig bzw. keulenförmig für räumliche Schutzbereiche. Beispielsweise beträgt ein Öffnungswinkel eines Schutzbereiches +/-60°. Es sind auch kleinere oder größere Öffnungswinkel vorgesehen. Jedoch können bei einem Sensor mit mehr als einer Empfangsantenne und/oder Sendeantenne auch rechteckförmige Schutzbereiche bzw. quaderförmige Schutzbereiche gebildet werden.

Beispielsweise emittiert der oder jeder Radarsensor mit der Empfangsantenne Radarwellen im Frequenzbereich von 40 GHz bis 125 GHz. Das Frequenzband des Radarsensors kann dabei kleiner sein als der angegebene Frequenzbereich.

Beispielsweise ist der Sensor ein Ultrabreitband-Funksensor. Der Ultrabreitband-Funksensor bildet ein Funkortungssystem insbesondere ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20 % der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

In der Sicherheitstechnik eingesetzte Sensoren müssen besonders zuverlässig und eigensicher arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Zur Erfüllung dieser Sicherheitsnormen sind eine Reihe von Maßnahmen zu treffen, wie beispielsweise sichere elektronische Auswertung durch redundante und/oder diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Der Begriff ,funktional sicher' ist im Sinne der genannten oder vergleichbaren Normen zu verstehen, es sind also Maßnahmen ergriffen, um Fehler bis zu einem spezifizierten Sicherheitsniveau zu beherrschen. Der sichere Sensor und/oder mindestens ein nicht sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen und dabei sind demnach die genannten Anforderungen an eine Fehlersicherheit nicht erfüllt.

In Weiterbildung der Erfindung ist die Robotersteuerung ausgebildet ein 3D-Modell der Umgebung auszuwerten und zusätzlich ausgehend von dem 3D-Modell den gefahrbringenden Teil des Roboters innerhalb des Schutzbereiches zu bewegen.

Gemäß der Weiterbildung liegt beispielsweise ein CAD-Modell der Applikation vor, aus dem klar wird, welches Volumen bzw. welcher geometrische Schutzbereich für eine Bahnplanung verwendet werden kann. Es soll dabei natürlich vermieden werden, dass der Roboter mit dem gefahrbringenden beweglichen Teil des Roboters in die Infrastruktur der Applikation wie z. B. Pulte, Förderbänder, Wände, etc. fährt. Entsprechend werden korrespondierende Infrastrukturen als unerlaubte Bereiche angesehen, die von dem gefahrbringenden Teil des Roboters gemieden werden müssen.

Gemäß der Erfindung ist die Robotersteuerung und/oder die Steuer- und Auswerteeinheit ausgebildet, das Volumen der Person oder das Volumen einzelner Extremitäten zu berücksichtigen und basierend auf dem Volumen der Person oder dem Volumen einzelner Extremitäten zusätzliche 3D-Pufferzonen zu addieren, wobei die Volumen der Person oder das Volumen einzelner Extremitäten mit den zusätzlichen 3D-Pufferzonen bei der Kinematik des gefahrbringenden Teils des Roboters (3) berücksichtigt werden.

Die 3D-Pufferzonen die bei einer Präsenz einer Person hinzu addiert werden, können beispielsweise an anthropometrische Daten gekoppelt werden - z. B. die Dicke einer Hand, die Dicke eines Armes, die dicke eines Beines usw. Dabei können auch extra Pufferzonen berücksichtigt werden, die aus der typischen Bewegungsgeschwindigkeit der menschlichen Gliedmaßen resultieren können. Für solche anthropometrische Daten gibt es eine Vielzahl von Normen, die auch Unterscheidung zwischen dem Alter und der ethnischen Abstammung von Personen machen.

In Weiterbildung der Erfindung ist die Steuer- und Auswerteeinheit dazu ausgebildet, die empfangenen 3D-Daten des Überwachungsbereichs mit bekannten Positionsdaten der Umgebung zu vergleichen und auf Übereinstimmung zu prüfen.

Gemäß der Weiterbildung wird beispielsweise eine statische Umgebung eingelernt. Damit können bereits dynamisch bewegte Objekte wie Personen einfacher detektiert und verfolgt werden.

Beispielsweise ist der Roboter ein mobiler Roboter oder ein ortsfester Roboter.

Bei dem Roboter kann es sich beispielsweise um einen mehrachsigen Roboter handeln, beispielsweise um einen Montageroboter in einer Fertigungslinie.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

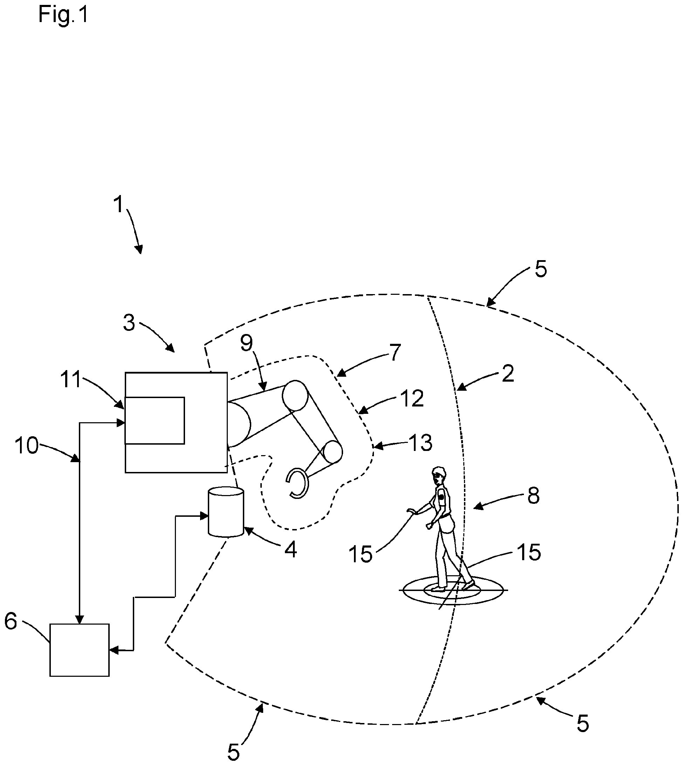

- Figur 1: ein System zur Überwachung eines Gefahrenbereichs eines Roboters mit mindestens einem Sensor;

In den nachfolgenden Figuren sind identische Teile mit identischen Bezugszeichen versehen.

Figur 1 zeigt ein System 1 zur Überwachung eines Gefahrenbereichs 2 eines Roboters 3, mit mindestens einem Sensor 4 mit mindestens einem räumlichen Überwachungsbereich 5 zur Überwachung des Gefahrenbereichs 2, und einer Steuer- und Auswerteeinheit 6, und einer Robotersteuerung 11 zum Steuern der Bewegungen mindestens eines gefahrbringenden Teils 9 des Roboters 3, wobei die Robotersteuerung 11 und die Steuer- und Auswerteeinheit 6 elektronisch mittels mindestens einer Schnittstelle 10 miteinander verbunden sind, wobei der Sensor 4 ausgebildet ist, zyklisch mindestens 3D-Daten des Überwachungsbereichs 5 an die Steuer- und Auswerteeinheit 6 zu senden, wobei der Sensor 4 und die Steuer- und Auswerteeinheit 6 weiter ausgebildet sind, mindestens einen räumlichen Schutzbereich 7 im Überwachungsbereich 5 zu erzeugen, wobei die Steuer- und Auswerteeinheit 6 ausgebildet ist, Personen 8 im Überwachungsbereich 5 des Sensors 4 anhand der 3D-Daten zu lokalisieren und deren Abstand zu dem gefahrbringenden Teil 9 des Roboters 3 zu bestimmen, wobei die Steuer- und Auswerteeinheit 6 ausgebildet ist, den räumlichen Schutzbereich 7 so anzuordnen, dass der räumliche Schutzbereich 7 den gefahrbringenden Teil 9 des Roboters 3 vollständig umgibt und einschließt und eine Oberfläche 12 des Schutzbereichs 7 eine äußere Sicherheitsgrenze 13 bildet, wobei die Lage der Sicherheitsgrenze 13 in Abhängigkeit von einem Abstand, einer Bewegungsrichtung und/oder einer Bewegungsgeschwindigkeit der Person 8 zu dem gefahrbringenden Teil 9 des Roboters 3 festlegbar ist, wobei die Robotersteuerung 11 ausgebildet ist den gefahrbringenden Teil 9 des Roboters 3 innerhalb des Schutzbereichs 7 frei zu bewegen.

Beispielsweise ist der Sensor 4 ein Lichtlaufzeitsensor, ein Laserscanner mit mehreren Scanebenen, eine Lichtlaufzeitkamera, eine Stereokamera, ein FMCW-Lidarsensor, ein Radarsensor, ein Ultrabreitband-Funksensor oder eine Infrarotkamera. Derartige Sensoren 4 sind geeignet einen räumlichen Überwachungsbereich 5 wirksam zu überwachen.

Beispielsweise ist der Roboter 3 ein mobiler Roboter oder ein ortsfester Roboter. Bei dem Roboter 3 kann es sich beispielsweise um einen mehrachsigen Roboter handeln, beispielsweise um einen Montageroboter in einer Fertigungslinie.

Die Steuer- und Auswerteeinheit 6 ist ausgebildet, Objekte oder Personen 8 im Sichtbereich des Sensors 4 anhand der 3D-Daten des Sensors 4 zu lokalisieren und deren Abstand zum gefahrbringenden beweglichen Teil 9 des Roboters 3 zu bestimmen.

Dieser Sensor 4 erfasst die Präsenz einer Person 8 bzw. eines Menschen. Wird eine Person 8 detektiert, so werden beispielsweise in einem Bahnplanungs-Programm Randbedingungen für die Bahnplanung verändert, falls dies notwendig ist.

Gemäß der Erfindung werden die Arbeitsabläufe des Roboters 3 auch bei der Präsenz einer Person 8 möglichst lange aufrechterhalten und es wird eine sichere Kollaboration ermöglicht. Die Arbeitsabläufe werden kausal und dynamisch angepasst, je nachdem, ob und wo eine Person 8 in der Nähe des Roboters 3 ist und mittels des Sensors 4 bzw. der Peripheriesensorik erfasst wurde. Dazu gibt es unterschiedliche Strategien. Grundlegend unterscheiden sie sich in der Orts- und in der Zeitdomäne.

In der Ortsdomäne gilt es zuerst Quetschszenarien und Scherszenarien zwischen der Person 8 und dem beweglichen gefahrbringenden Teil 9 des Roboters 3 zu eliminieren, denn von ihnen geht die größte Verletzungsschwere aus. Schließlich geht es darum ein Rammen des Roboters 3 bzw. der gefahrbringenden Teile 9 des Roboters 3 zu vermeiden.

In der Zeitdomäne können alle beweglichen Teile bzw. gefahrbringende Teile des Roboters 3 verlangsamt oder gestoppt werden, um der Person 8 oder dem Werker mehr Zeit zu geben sich aus einer potentiell gefährlichen Situation zu entfernen bzw. zu befreien.

Ein Vermeiden von Quetschungen durch beweglich Teile des Roboters 3 kann beispielsweise folgendermaßen erfolgen. Es ist beispielsweise vorgesehen, den Schutzbereich 7 bzw. das Volumen, in dem mögliche Trajektorien errechnet werden dürfen geschickt einzuschränken. Ist z. B. eine Person 8 zugegen kann auf den bestehenden Schutzbereich 7 eine zusätzliche 3D-Pufferzone addiert werden. Diese 3D-Pufferzone umschließt den Schutzbereich 7 zusätzlich. Diese 3D-Pufferzone trägt dazu bei, dass Kontakte bzw. Berührungen zwischen dem gefahrbringenden Teil 9 des Roboters 3 und der Person 8 gar nicht erfolgen werden, da bei allen möglichen Trajektorien innerhalb des Schutzbereichs 7 immer noch genug Platz bleibt, um eine Quetschung zu vermeiden.

Die 3D-Pufferzonen die bei einer Präsenz einer Person 8 hinzu addiert werden, können beispielsweise an anthropometrische Daten gekoppelt werden - z. B. die Dicke einer Hand, die Dicke eines Armes, die dicke eines Beines usw. Dabei können auch extra Pufferzonen berücksichtigt werden, die aus der typischen Bewegungsgeschwindigkeit der menschlichen Gliedmaßen resultieren können.

Ein Vermeiden von Scherungen durch die beweglichen Teile 9 des Roboters 3 kann beispielsweise folgendermaßen erfolgen. Das mögliche Scheren von menschlichen Gliedmaßen in Robotergelenken kann verhindert werden. So können manche Gelenkwinkel des Roboters 3 mit Beschränkungen versehen werden, die ein Scheren vermeiden. Insbesondere sollen keine spitzen Winkel zugelassen werden. Es ist dabei vorgesehen, dass jede Roboterachse unterschiedliche Beschränkungen erhalten kann.

Beispielsweise ist ein Verlangsamen oder Stoppen der gefahrbringenden beweglichen Teile 9 des Roboters 3 vorgesehen. Schließlich kann die Relativgeschwindigkeit zwischen Person 8 und Roboter 3 noch kausal geregelt werden. Anders als in den oben genannten Verfahren wird hier nicht in der Ortsdomäne (also beispielsweise die Bahn) eingeschränkt, sondern in der Zeitdomäne eingeschränkt, da nämlich bahntreu verlangsamt oder gestoppt wird und situativ die Fahrt aufgenommen wird, sofern das Gefährdungspotential nicht mehr gegeben ist.

Beispielsweise wird eine Hierarchisierung der Gefahrenminderungsmaßnahmen vorgesehen. Es ist beispielsweise vorgesehen, dass ein Kontrollsystem bzw. eine ,ruleengine' verwendet wird, welches Regeln verarbeitet, unter welchen kausalen Voraussetzungen, welche der oben beschriebenen Gefahrenminderungsmaßnahmen eingesetzt werden können. Ist z. B. eine Person 8 noch weit vom Roboter 3 entfernt, so können zunächst weniger weitreichende Methoden wie das Konzept der mittleren reflektierten Masse (MRM-Konzept) angewendet werden. Kommt die Person 8 näher können z. B. zusätzlich gefährliche Scherwinkel vermieden werden und die Geschwindigkeit der gefahrbringenden Teile 9 vermindert werden. Der Schutzbereich 7 bzw. Volumen für mögliche situative Bahnplanungen ist hierzu noch kaum eingeschränkt. Erst wenn die Person 8 in unmittelbarer Nähe zum Roboter 3 ist, wird schließlich das Quetschen vermieden und der Roboter 3 in seiner Bewegungsfreiheit eingeschränkt. Auch kann eine Bewertung stattfinden ob z. B. genug Zeit bleibt, dass bestimmte Mechanismen wie "stumpfe Gelenkwinkel" in der antizipierten Annäherungszeit der Person 8 möglich sind. Sollte dies beispielsweise ausgeschlossen sein so muss der Roboter 3 gestoppt werden.

Durch die oben beschriebenen Maßnahmen kann die Bewegung des Roboters 3 deutlich länger aufrechterhalten werden als dies bei einem Stoppen des Roboters 3 oder bei einem bahntreuen Verlangsamen des Roboters 3 möglich wäre. So kann die Produktion auch in Präsenz einer Person 8 solange aufrechterhalten werden bis ein Lösungsraum bzw. ein Schutzbereich 7 für neue Roboterbahnen eine Bewegung zulässt. Es sind damit also Ausweichmanöver des Roboters 3 in Gegenwart der Person 8 möglich. Auf diese Weise kann auch eine ergonomische Zusammenarbeit zwischen Personen 8 und Roboter 3 gewährleistet werden.

Gemäß der Erfindung ist die Robotersteuerung 11 ausgebildet die Kinematik des gefahrbringenden Teils 9 des Roboters 3 im Schutzbereich 7 örtlich und/oder zeitlich anzupassen.

Beispielsweise ist die Steuer- und Auswerteeinheit 6 ausgebildet, mindestens den gefahrbringenden Teil 9 des Roboters 3 zu veranlassen eine Ausweichbewegung durchzuführen, falls der Abstand der Person 8 zu dem gefahrbringenden Teil 9 des Roboters 3 vordefinierte Abstandswerte unterschreitet.

Beispielsweise ist die Steuer und Auswerteeinheit 6 ausgebildet einzelne Körperteile bzw. Extremitäten 15 der Person 8 zu identifizieren und deren Abstand, Bewegungsrichtung und/oder einer Bewegungsgeschwindigkeit zu dem gefahrbringenden Teil 9 des Roboters 3 zu bestimmen.

Beispielsweise erfolgt eine Identifikation der gefährdeten Körperteile bzw. Extremitäten 15. Aus dem Applikationskontext heraus kann beispielsweise geschlossen werden, welche Körperteile bei der Präsenz einer Person 8 getroffen werden könnten. Entsprechend werden beispielsweise kausale Vorgaben oder kausale Wenn-Dann-Vorgaben für den Bewegungsplanungsalgorithmus gemacht. Wird insbesondere ein kalibrierter Sensor 4 mit einem messenden räumlichen Überwachungsbereich 5 verwendet, so kann auch eine Vermessung und Abschätzung der menschlichen Gliedmaßen bzw. Körperteile vorgenommen werden. Diese Vermessung kann auch zur Plausibilisierung verwendet werden, dass die Inputparameter für die Bahnplanungsberechnung korrekt bzw. angemessen sind.

Beispielsweise ist die Robotersteuerung 11 und/oder die Steuer- und Auswerteeinheit 6 ausgebildet biomechanische Eigenschaften der Person 8 oder einzelner Extremitäten 15 bei der Kinematik des gefahrbringenden Teils 9 des Roboters 3 zu berücksichtigen.

Insbesondere werden dauerhafte bzw. statische Kontakte und zeitlich begrenzte Kontakte unterschieden.

Bei den dauerhaften Kontakten existiert im Falle einer Kollision zwischen Person 8 und Roboter 3 eine Quetschgefahr, da ein menschliches Körperteil zwischen Roboter 3 und Applikationsoberfläche eingeklemmt werden kann.

Bei den zeitlich begrenzten bzw. transienten Kontakten ist die Gefahr nicht so hoch, da die Person 8 hier noch ausweichen kann, da die Person 8 beispielsweise lediglich zur Seite gedrückt wird. Entsprechend sind Limitierungen hier weniger restriktiv.

Beispielsweise ist die Robotersteuerung 11 und/oder die Steuer- und Auswerteeinheit 6 ausgebildet biomechanische Eigenschaften der Person 8 oder einzelner Extremitäten 15 zu berücksichtigen und basierend auf den biomechanischen Eigenschaften der Person 8 oder einzelner Extremitäten 15 zulässige Geschwindigkeiten des gefahrbringenden Teils 9 des Roboters 3 zu berechnen und bei der Kinematik des gefahrbringenden Teils 9 des Roboters 3 zu berücksichtigen.

Grenzwerte aus biomechanischen Eigenschaften können gemäß der Weiterbildung in zulässige maximale Robotergeschwindigkeiten umgerechnet werden, sofern das Körperteil, das Kontaktszenario und die sog. effektive Robotermasse bekannt sind.

Beispielsweise ist die Robotersteuerung 11 ausgebildet ein 3D-Modell der Umgebung auszuwerten und ausgehend von dem 3D-Modell den gefahrbringenden Teil 9 des Roboters 3 innerhalb des Schutzbereiches 7 zu bewegen.

Beispielsweise liegt ein CAD-Modell der Applikation vor, aus dem klar wird, welches Volumen bzw. welcher geometrische Schutzbereich 7 für eine Bahnplanung verwendet werden kann. Es soll dabei natürlich vermieden werden, dass der Roboter 3 mit dem gefahrbringenden beweglichen Teil 9 des Roboters 3 in die Infrastruktur der Applikation wie z. B. Pulte, Förderbänder, Wände, etc. fährt. Entsprechend werden korrespondierende Infrastrukturen als unerlaubte Bereiche angesehen, die von dem gefahrbringenden Teil 9 des Roboters 3 gemieden werden müssen.

Beispielsweise ist die Steuer- und Auswerteeinheit 6 dazu ausgebildet, die empfangenen 3D-Daten des Überwachungsbereichs 5 mit bekannten Positionsdaten der Umgebung zu vergleichen und auf Übereinstimmung zu prüfen.

Beispielsweise wird eine statische Umgebung eingelernt. Damit können bereits dynamisch bewegte Objekt wie Personen 8 einfacher detektiert und verfolgt werden.

### Bezugszeichen:

1 System
2 Gefahrenbereich
3 Roboter
4 Sensor
5 räumlicher Überwachungsbereich
6 Steuer- und Auswerteeinheit
7 Schutzbereich
8 Personen
9 gefahrbringender Teil der Roboter
10 Schnittstelle
11 Robotersteuerung
12 Oberfläche des Schutzbereichs
13 Sicherheitsgrenze
15 Extremitäten

## Patentansprüche

1. System (1) zur Überwachung eines Gefahrenbereichs (2) eines Roboters (3), mit mindestens einem Sensor (4) mit mindestens einem räumlichen Überwachungsbereich (5) zur Überwachung des Gefahrenbereichs (2),
und einer Steuer- und Auswerteeinheit (6),
und einer Robotersteuerung (11) zum Steuern der Bewegungen mindestens eines gefahrbringenden Teils (9) des Roboters (3),
wobei die Robotersteuerung (11) und die Steuer- und Auswerteeinheit (6) elektronisch mittels mindestens einer Schnittstelle (10) miteinander verbunden sind, wobei der Sensor (4) ausgebildet ist, zyklisch mindestens 3D-Daten des Überwachungsbereichs (5) an die Steuer- und Auswerteeinheit (6) zu senden, wobei der Sensor (4) und die Steuer- und Auswerteeinheit (6) weiter ausgebildet sind, mindestens einen räumlichen Schutzbereich (7) im Überwachungsbereich (5) zu erzeugen,
wobei die Steuer- und Auswerteeinheit (6) ausgebildet ist, Personen (8) im Überwachungsbereich (5) des Sensors (4) anhand der 3D-Daten zu lokalisieren und deren Abstand zu dem gefahrbringenden Teil (9) des Roboters (3) zu bestimmen,
wobei
die Steuer- und Auswerteeinheit (6) ausgebildet ist, den räumlichen Schutzbereich (7) so anzuordnen, dass der räumliche Schutzbereich (7) den gefahrbringenden Teil (9) des Roboters (3) vollständig umgibt und einschließt und eine Oberfläche (12) des Schutzbereichs (7) eine äußere Sicherheitsgrenze (13) bildet, wobei die Steuer- und Auswerteeinheit (6) ausgebildet ist die Lage der Sicherheitsgrenze (13) in Abhängigkeit von einem Abstand, einer Bewegungsrichtung und/oder einer Bewegungsgeschwindigkeit der Person (8) zu dem gefahrbringenden Teil (9) des Roboters (3) festzulegen,
wobei die Robotersteuerung (11) ausgebildet ist den gefahrbringenden Teil (9) des Roboters (3) innerhalb des Schutzbereichs (7) frei zu bewegen, **dadurch gekennzeichnet, dass** die Robotersteuerung (11) und/oder die Steuer- und Auswerteeinheit (6) ausgebildet ist das Volumen der Person (8) oder das Volumen einzelner Extremitäten (15) zu berücksichtigen und basierend auf dem Volumen der Person (8) oder dem Volumen einzelner Extremitäten (15) zusätzliche 3D-Pufferzonen zu addieren, wobei das Volumen der Person (8) oder das Volumen einzelner Extremitäten (15) mit den zusätzlichen 3D-Pufferzonen bei der Kinematik des gefahrbringenden Teils (9) des Roboters (3) berücksichtigt werden, wobei diese 3D-Pufferzonen den Schutzbereich zusätzlich umschließen.

2. System (1) nach Anspruch 1, **dadurch gekennzeichnet, dass** die Steuer- und Auswerteeinheit (6) ausgebildet ist, mindestens den gefahrbringenden Teil (9) des Roboters (3) zu veranlassen eine Ausweichbewegung durchzuführen, falls der Abstand der Person (8) zu dem gefahrbringenden Teil (9) des Roboters (3) vordefinierte Abstandswerte unterschreitet.

3. System (1) nach einem der vorhergehenden Ansprüche, **dadurch gekennzeichnet, dass** die Steuer und Auswerteeinheit (6) ausgebildet ist einzelne Extremitäten (15) der Person (8) zu identifizieren und deren Abstand, Bewegungsrichtung und/oder Bewegungsgeschwindigkeit zu dem gefahrbringenden Teil (9) des Roboters (3) zu bestimmen.

4. System (1) nach einem der vorhergehenden Ansprüche, **dadurch gekennzeichnet, dass** die Robotersteuerung (11) und/oder die Steuer- und Auswerteeinheit (6) ausgebildet ist biomechanische Eigenschaften der Person (8) oder einzelner Extremitäten (15) bei der Kinematik des gefahrbringenden Teils (9) des Roboters (3) zu berücksichtigen.

5. System (1) nach einem der vorhergehenden Ansprüche, **dadurch gekennzeichnet, dass** die Robotersteuerung (11) und/oder die Steuer- und Auswerteeinheit (6) ausgebildet ist biomechanische Eigenschaften der Person (8) oder einzelner Extremitäten (15) zu berücksichtigen und basierend auf den biomechanischen Eigenschaften der Person (8) oder einzelner Extremitäten (15) zulässige Geschwindigkeiten des gefahrbringenden Teils (9) des Roboters (3) zu berechnen und bei der Kinematik des gefahrbringenden Teils (9) des Roboters (3) zu berücksichtigen.

6. System (1) nach einem der vorhergehenden Ansprüche, **dadurch gekennzeichnet, dass** der Sensor (4) ein Lichtlaufzeitsensor, ein Laserscanner mit mehreren Scanebenen, eine Lichtlaufzeitkamera, eine Stereokamera, ein FMCW-Lidar-sensor, ein Radarsensor, ein Ultrabreitband-Funksensor oder eine Infrarotkamera ist.

7. System (1) nach einem der vorhergehenden Ansprüche, **dadurch gekennzeichnet, dass** die Robotersteuerung (11) ausgebildet ist ein 3D-Modell der Umgebung auszuwerten und zusätzlich ausgehend von dem 3D-Modell den gefahrbringenden Teil (9) des Roboters (3) innerhalb des Schutzbereiches (7) zu bewegen.

8. System (1) nach einem der vorhergehenden Ansprüche, **dadurch gekennzeichnet, dass** die Steuer- und Auswerteeinheit (6) dazu ausgebildet ist, die empfangenen 3D-Daten des Überwachungsbereichs (5) mit bekannten Positionsdaten der Umgebung zu vergleichen und auf Übereinstimmung zu prüfen.

9. Verfahren (1) zur Überwachung eines Gefahrenbereichs (2) eines Roboters (3), mit mindestens einem Sensor (4) mit mindestens einem räumlichen Überwachungsbereich (5) zur Überwachung des Gefahrenbereichs (2),
und einer Steuer- und Auswerteeinheit (6),
und einer Robotersteuerung (11) zum Steuern der Bewegungen mindestens eines gefahrbringenden Teils (9) des Roboters (3),
wobei die Robotersteuerung (11) und die Steuer- und Auswerteeinheit (6) elektronisch mittels mindestens einer Schnittstelle (10) miteinander verbunden sind, wobei der Sensor (4) zyklisch mindestens 3D-Daten des Überwachungsbereichs (5) an die Steuer- und Auswerteeinheit (6) sendet,
wobei der Sensor (4) und die Steuer- und Auswerteeinheit (6) mindestens einen räumlichen Schutzbereich (7) im Überwachungsbereich (5) erzeugen,
wobei die Steuer- und Auswerteeinheit (6) Personen (8) im Überwachungsbereich (5) des Sensors (4) anhand der 3D-Daten lokalisiert und deren Abstand zu dem gefahrbringenden Teil (9) des Roboters (3) bestimmt,
wobei
die Steuer- und Auswerteeinheit (6) den räumlichen Schutzbereich (7) so anordnet, dass der räumliche Schutzbereich (7) den gefahrbringenden Teil (9) des Roboters (3) vollständig umgibt und einschließt und eine Oberfläche des Schutzbereichs (12) eine äußere Sicherheitsgrenze (13) bildet, wobei die Steuer- und Auswerteeinheit (6) die Lage der Sicherheitsgrenze (13) in Abhängigkeit von einem Abstand, einer Bewegungsrichtung und/oder einer Bewegungsgeschwindigkeit der Person (8) zu dem gefahrbringenden Teil (9) des Roboters (3) festlegt,
wobei die Robotersteuerung (11) den gefahrbringenden Teil (9) des Roboters (3) innerhalb des Schutzbereichs (7) frei bewegt, **dadurch gekennzeichnet, dass** die Robotersteuerung (11) und/oder die Steuer- und Auswerteeinheit (6) ausgebildet ist das Volumen der Person (8) oder das Volumen einzelner Extremitäten (15) zu berücksichtigen und basierend auf dem Volumen der Person (8) oder dem Volumen einzelner Extremitäten (15) zusätzliche 3D-Pufferzonen zu addieren, wobei das Volumen der Person (8) oder das Volumen einzelner Extremitäten (15) mit den zusätzlichen 3D-Pufferzonen bei der Kinematik des gefahrbringenden Teils (9) des Roboters (3) berücksichtigt werden, und wobei diese 3D-Pufferzonen den Schutzbereich zusätzlich umschließen.

## Claims

1. A system (1) for monitoring a hazard zone (2) of a robot (3),
having at least one sensor (4) having at least one spatial monitored zone (5) for monitoring the hazard zone (2);
and a control and evaluation unit (6);
and a robot controller (11) for controlling the movements of at least one hazardous part (9) of the robot (3),
wherein the robot controller (11) and the control and evaluation unit (6) are electronically connected to one another by means of at least one interface (10);
wherein the sensor (4) is configured to cyclically transmit at least 3D data of the monitored zone (5) to the control and evaluation unit (6);
wherein the sensor (4) and the control and evaluation unit (6) are further configured to generate at least one spatial protected zone (7) in the monitored zone (5);
wherein the control and evaluation unit (6) is configured to localize persons (8) in the monitored zone (5) of the sensor (4) with reference to the 3D data and to determine their distance from the hazardous part (9) of the robot (3),
wherein
the control and evaluation unit (6) is configured to arrange the spatial protected zone (7) such that the spatial protected zone (7) completely surrounds and includes the hazardous part (9) of the robot (3) and a surface (12) of the protected zone (7) forms an outer safety boundary (13), with the control and evaluation unit (6) being configured to fix the location of the safety boundary (13) in dependence on a distance, on a direction of movement and/or on a movement speed of the person (8) with respect to the hazardous part (9) of the robot (3),
and wherein the robot controller (11) is configured to freely move the hazardous part (9) of the robot (3) within the protected zone (7), **characterized in that** the robot controller (11) and/or on the control and evaluation unit (6) is/are configured to take account of the volume of the person (8) or the volume of individual extremities (15) and to add additional 3D buffer zones based on the volume of the person (8) or the volume of individual extremities (15), with the volume of the person (8) or the volume of individual extremities (15) having the additional 3D buffer zones being considered in the kinematics of the hazardous part (9) of the robot (3),with said 3D buffer zone additionally surrounding the protected zone.

2. A system (1) in accordance with claim 1, **characterized in that** the control and evaluation unit (6) is configured to cause at least the hazardous part (9) of the robot (3) to perform an evasive movement if the distance of the person (8) from the hazardous part (9) of the robot (3) falls below predefined distance values.

3. A system (1) in accordance with any one of the preceding claims, **characterized in that** the control and evaluation unit (6) is configured to identify individual extremities (15) of the person (8) and to determine their distance, direction of movement, and/or speed movement with respect to the hazardous part (9) of the robot (3).

4. A system (1) in accordance with any one of the preceding claims, **characterized in that** the robot controller (11) and/or the control and evaluation unit (6) is/are configured to take account of biomechanical properties of the person (8) or of individual extremities (15) in the kinematics of the hazardous part (9) of the robot (3).

5. A system (1) in accordance with any one of the preceding claims, **characterized in that** the robot controller (11) and/or the control and evaluation unit (6) is/are configured to take account of biomechanical properties of the person (8) or of individual extremities (15) and to calculate permitted speeds of the hazardous part (9) of the robot (3) based on the biomechanical properties of the person (8) or of individual extremities (15) and to take them into account in the kinematics of the hazardous part (9) of the robot (3).

6. A system (1) in accordance with any one of the preceding claims, **characterized in that** the sensor (4) is a time of flight sensor, a laser scanner having a plurality of scan planes, a time of flight camera, a stereo camera, an FMCW LiDAR sensor, a radar sensor, an ultra-wideband radio sensor, or an infrared camera.

7. A system (1) in accordance with any one of the preceding claims, **characterized in that** the robot controller (11) is configured to evaluate a 3D model of the environment and to additionally move the hazardous part (9) of the robot (3) within the protected zone (7) starting from the 3D model.

8. A system (1) in accordance with any one of the preceding claims, **characterized in that** the control and evaluation unit (6) is configured to compare the received 3D data of the monitored zone (5) with known position data of the environment and to check them for agreement.

9. A method (1) of monitoring a hazard zone (2) of a robot (3),
having at least one sensor (4) having at least one spatial monitored zone (5) for monitoring the hazard zone (2);
and a control and evaluation unit (6);
and a robot controller (11) for controlling the movements of at least one hazardous part (9) of the robot (3),
wherein the robot controller (11) and the control and evaluation unit (6) are electronically connected to one another by means of at least one interface (10);
wherein the sensor (4) cyclically transmits at least 3D data of the monitored zone (5) to the control and evaluation unit (6);
wherein the sensor (4) and the control and evaluation unit (6) generate at least one spatial protected zone (7) in the monitored zone (5);
wherein the control and evaluation unit (6) localizes persons (8) in the monitored zone (5) of the sensor (4) with reference to the 3D data and determines their distance from the hazardous part (9) of the robot (3),
wherein
the control and evaluation unit (6) arranges the spatial protected zone (7) such that the spatial protected zone (7) completely surrounds and includes the hazardous part (9) of the robot (3) and a surface of the protected zone (12) forms an outer safety boundary (13), with the control and evaluation unit (6) fixing the location of the safety boundary (13) being fixable in dependence on a distance, on a direction of movement and/or on a movement speed of the person (8) with respect to the hazardous part (9) of the robot (3),
and with the robot controller (11) freely moving the hazardous part (9) of the robot (3) within the protected zone (7), **characterized in that** the robot controller (11) and/or on the control and evaluation unit (6) is/are configured to take account of the volume of the person (8) or the volume of individual extremities (15) and to add additional 3D buffer zones based on the volume of the person (8) or the volume of individual extremities (15), with the volume of the person (8) or the volume of individual extremities (15) having the additional 3D buffer zones being considered in the kinematics of the hazardous part (9) of the robot (3) and with said 3D buffer zone additionally surrounding the protected zone.

## Revendications

1. Système (1) de surveillance d'une zone de danger (2) d'un robot (3), comprenant
au moins un capteur (4) présentant au moins une zone de surveillance spatiale (5) destinée à surveiller la zone de danger (2),
et une unité de commande et d'évaluation (6),
et une commande de robot (11) destinée à commander les mouvements d'au moins une partie dangereuse (9) du robot (3),
dans lequel
la commande de robot (11) et l'unité de commande et d'évaluation (6) sont reliées entre elles électroniquement au moyen d'au moins une interface (10),
le capteur (4) est conçu pour envoyer cycliquement au moins des données 3D de la zone de surveillance (5) à l'unité de commande et d'évaluation (6), le capteur (4) et l'unité de commande et d'évaluation (6) sont en outre conçus pour engendrer au moins une zone de protection spatiale (7) dans la zone de surveillance (5),
l'unité de commande et d'évaluation (6) est conçue pour localiser des personnes (8) dans la zone de surveillance (5) du capteur (4) à l'aide des données 3D et pour déterminer leur distance par rapport à la partie dangereuse (9) du robot (3),
l'unité de commande et d'évaluation (6) est conçue pour positionner la zone de protection spatiale (7) de telle sorte que la zone de protection spatiale (7) entoure et enferme complètement la partie dangereuse (9) du robot (3) et qu'une surface (12) de la zone de protection (7) forme une limite de sécurité extérieure (13),
l'unité de commande et d'évaluation (6) est conçue pour fixer la position de la limite de sécurité (13) en fonction d'une distance, d'une direction de mouvement et/ou d'une vitesse de mouvement de la personne (8) par rapport à la partie dangereuse (9) du robot (3),
la commande de robot (11) est conçue pour déplacer librement la partie dangereuse (9) du robot (3) à l'intérieur de la zone de protection (7), **caractérisé en ce que**
la commande de robot (11) et/ou l'unité de commande et d'évaluation (6) est conçue pour prendre en compte le volume de la personne (8) ou le volume des extrémités individuelles (15) et pour ajouter des zones tampons 3D supplémentaires en se basant sur le volume de la personne (8) ou sur le volume des extrémités individuelles (15), le volume de la personne (8) ou le volume des extrémités individuelles (15) avec les zones tampons 3D supplémentaires étant pris en compte dans la cinématique de la partie dangereuse (9) du robot (3), et ces zones tampons 3D entourant en supplément la zone de protection.

2. Système (1) selon la revendication 1,
**caractérisé en ce que** l'unité de commande et d'évaluation (6) est conçue pour inciter au moins la partie dangereuse (9) du robot (3) à effectuer un mouvement d'évitement si la distance entre la personne (8) et la partie dangereuse (9) du robot (3) est inférieure à des valeurs de distance prédéfi-nies.

3. Système (1) selon l'une des revendications précédentes,
**caractérisé en ce que** l'unité de commande et d'évaluation (6) est conçue pour identifier des extrémités individuelles (15) de la personne (8) et pour déterminer leur distance, leur direction de mouvement et/ou leur vitesse de mouvement par rapport à la partie dangereuse (9) du robot (3).

4. Système (1) selon l'une des revendications précédentes,
**caractérisé en ce que** la commande de robot (11) et/ou l'unité de commande et d'évaluation (6) est conçue pour prendre en compte les propriétés biomécaniques de la personne (8) ou des extrémités individuelles (15) dans la cinématique de la partie dangereuse (9) du robot (3).

5. Système (1) selon l'une des revendications précédentes,
**caractérisé en ce que** la commande de robot (11) et/ou l'unité de commande et d'évaluation (6) est conçue pour prendre en compte les propriétés biomécaniques de la personne (8) ou des extrémités individuelles (15) et, en se basant sur les propriétés biomécaniques de la personne (8) ou des extrémités individuelles (15), pour calculer les vitesses admissibles de la partie dangereuse (9) du robot (3) et pour les prendre en compte dans la cinématique de la partie dangereuse (9) du robot (3).

6. Système (1) selon l'une des revendications précédentes,
**caractérisé en ce que** le capteur (4) est un capteur de temps de vol de lumière, un scanner laser à plusieurs plans de balayage, une caméra à temps de vol de lumière, une caméra stéréo, un capteur lidar FMCW, un capteur radar, un capteur radio à bande ultra-large ou une caméra infrarouge.

7. Système (1) selon l'une des revendications précédentes,
**caractérisé en ce que** la commande de robot (11) est conçue pour évaluer un modèle 3D de l'environnement et pour déplacer, en se basant en supplément sur le modèle 3D, la partie dangereuse (9) du robot (3) à l'intérieur de la zone de protection (7).

8. Système (1) selon l'une des revendications précédentes,
**caractérisé en ce que** l'unité de commande et d'évaluation (6) est conçue pour comparer les données 3D reçues de la zone de surveillance (5) avec des données de position connues de l'environnement et pour en vérifier la concordance.

9. Procédé (1) de surveillance d'une zone de danger (2) d'un robot (3), comprenant au moins un capteur (4) présentant au moins une zone de surveillance spatiale (5) destinée à surveiller la zone de danger (2),
et une unité de commande et d'évaluation (6),
et une commande de robot (11) destinée à commander les mouvements d'au moins une partie dangereuse (9) du robot (3),
dans lequel
la commande de robot (11) et l'unité de commande et d'évaluation (6) sont reliées entre elles électroniquement au moyen d'au moins une interface (10),
le capteur (4) envoie cycliquement au moins des données 3D de la zone de surveillance (5) à l'unité de commande et d'évaluation (6),
le capteur (4) et l'unité de commande et d'évaluation (6) engendrent au moins une zone de protection spatiale (7) dans la zone de surveillance (5), l'unité de commande et d'évaluation (6) localise des personnes (8) dans la zone de surveillance (5) du capteur (4) à l'aide des données 3D et détermine leur distance par rapport à la partie dangereuse (9) du robot (3), l'unité de commande et d'évaluation (6) positionne la zone de protection spatiale (7) de telle sorte que la zone de protection spatiale (7) entoure et enferme complètement la partie dangereuse (9) du robot (3) et qu'une surface de la zone de protection (12) forme une limite de sécurité extérieure (13), l'unité de commande et d'évaluation (6) fixe la position de la limite de sécurité (13) en fonction d'une distance, d'une direction de mouvement et/ou d'une vitesse de mouvement de la personne (8) par rapport à la partie dangereuse (9) du robot (3),
la commande de robot (11) déplace librement la partie dangereuse (9) du robot (3) à l'intérieur de la zone de protection (7),
**caractérisé en ce que**
la commande de robot (11) et/ou l'unité de commande et d'évaluation (6) est conçue pour prendre en compte le volume de la personne (8) ou le volume des extrémités individuelles (15) et pour ajouter des zones tampons 3D supplémentaires en se basant sur le volume de la personne (8) ou sur le volume des extrémités individuelles (15), le volume de la personne (8) ou le volume des extrémités individuelles (15) avec les zones tampons 3D supplémentaires étant pris en compte dans la cinématique de la partie dangereuse (9) du robot (3), et ces zones tampons 3D entourant en supplément la zone de protection.
